# EUROPEAN PATENT SPECIFICATION

(11) **EP 3 040 269 B1**
(45) Date of publication and mention of the grant of the patent: **25.07.2018**
(21) Application number: 14200416.7
(22) Date of filing: 29.12.2014
(51) Int. Cl.: B64C 11/20

(54) **Propeller blade**
Propellerblatt
Pale d'hélice

(43) Date of publication of application: 06.07.2016
(73) Proprietor: Airbus Operations S.L., 28906 Getafe (ES); Airbus Operations S.A.S., 31060 Toulouse (FR)
(72) Inventor: Toral Vàzquez, Javier, 28906 Getafe (ES); Folch Cortes, Diego, 28906 Getafe (ES); Martino González, Esteban, 28906 Getafe (ES); Goya Abaurrea, Pablo, 28906 Getafe (ES); Votsios, Vasillis, 28906 Getafe (ES); Fouinnetau, Michel, 31060 Toulouse - Cedex 09 (FR); Roumegas, Sylvain, 31060 Toulouse Cedex 09 (FR)
(74) Representative: ABG Patentes, S.L.

(56) References cited:
- WO-A1-00/66429
- WO-A1-99/20491
- JP-A- 2009 035 161
- US-A- 3 352 513
- US-A- 3 778 008
- US-A- 3 912 200
- US-A- 3 926 388

## Description

### TECHNICAL FIELD OF THE INVENTION

The present invention belongs to the field of engines with unducted propeller blades, and more particularly to the blades comprised therein.

### BACKGROUND OF THE INVENTION

Blades comprised in propellers and fans usually work under severe conditions. The design parameters and security margins are carefully set, but it is not impossible that a blade may break and release from the hub. In this case, the blade may impact on other blades or on other parts of the aircraft, causing some damage to them.

WO 00/66429 A1 discloses a propeller blade for attachment to a receiving member of a hub of a propeller.

Some aircraft are powered by engines which comprise unducted propeller blades. These engines are joined to the aircraft structure by means of pylons. They can be located in the wing section, under a high wing for example, or on the rear end of the fuselage. In the latter case, the pylons which support these engines are usually not very long, so the engines and thus the propeller blades are located in close proximity to the fuselage structure. A blade release or rupture is therefore very critical in these cases, as it can cause severe damage to the fuselage structure or even to the opposite engine.

The solutions proposed in the state of the art include the reinforcement of the fuselage in the parts that are predictably impacted by a blade which is released from a propeller. However, this solution pose a weight increase in the aircraft structure and a not very secure position, as a released blade at high speed may draw a not very predictable trajectory. Weight is a critical issue in aircraft design, so this drawback is very important in this technical field. US 3 912 200 discloses an emergency rotor blade disconnect system for at least two pairs of opposing helicopter rotor blades. A plurality of parallel wires are embedded in each blade and electrically connected to an explosive squib-actuated rotor blade disconnect at the rotor hub. Breakage of one of the rotor blades along its length initiates an electrical circuit to disconnect the remaining portion thereof from the rotor hub, and also to disconnect the blade opposite to the one blade in order to maintain rotor balance and avoid excessive rotor vibration.

### SUMMARY OF THE INVENTION

The present invention provides solution for the aforementioned problem, by a propeller blade according to claim 1, comprising a self-destruction device, an engine according to claim 11 and an aircraft according to claim 12. In dependent claims, preferred embodiments of the invention are defined.

The invention provides a propeller blade comprising a self-destruction device according to a first inventive aspect. In the first inventive aspect, the invention provides a self-destruction device installed in the propeller blade, the self-destruction device comprising
detecting means adapted to detect a release of the propeller blade,
warning means adapted to send a release alarm in the event of the detecting means detecting release of the propeller blade, and
destruction means, the destruction means being adapted to destroy the propeller blade in the event of receiving a release alarm from the warning means, wherein the detecting means comprise a plurality of accelerometers arranged along the span of the propeller blade.

This self-destruction device is suitable for being installed in a propeller blade, providing means to break it into pieces if necessary.

In a particular embodiment, the detecting means comprise a circuit that is intended to be arranged along the span of the propeller blade, so that an eventual blade release would cause the opening of the circuit and the alarm release by the warning means.

In a particular embodiment, the destruction means comprise at least one explosive load.

In a particular embodiment, the destruction means comprise a plurality of explosive loads. In a particular embodiment, the explosive loads are arranged covering the whole span of the propeller blade. In a particular embodiment, the explosive loads are explosive wires.

Having a plurality of explosive loads instead of only one provides several advantages. On the one hand, the released/broken blade is broken into more pieces than in the case of having only one explosive load. These smaller pieces will impact the fuselage, but the energy of these impacts will be much lower than in the case of bigger ones. On the other hand, this solution allows dividing the total explosive load into several smaller ones, so that each explosion involves a lower energy. When using this invention in blades which operate very close to the fuselage structure it is important to ensure that the energy of each explosion is lower than the impact energy the whole blade or blade piece would cause if no such a device were used.

In a particular embodiment, the destruction means comprise means for initiating a shock wave.

Advantageously, a propeller blade comprising such a self-destruction means is suitable for being destroyed when partially or totally released, in such a way that the destruction of the released blade or portion is always less harmful to the fuselage than the impact of said released blade or portion.

Advantageously, locating an accelerometer near the tip of the propeller blade ensures that both a partial break and a total release of the propeller blade is detected by the detecting means, and therefore the destruction means achieve their aim of avoiding a big piece of the propeller blade reaches the fuselage.

In a particular embodiment, the propeller blade is made of a fibre composite material and the destruction means are explosive wires which are interwoven with the fibres of the composite material.

Advantageously, this embodiment ensures a destruction of the blade, as the fibres of the composite material provides the main mechanical properties to the propeller blade.

In a particular embodiment, the propeller blade comprises a skin and reinforcing elements, and the destruction means are located next to the reinforcing elements.

In a particular embodiment, the propeller blade comprises a skin, an annular spar which extends substantially along the span of the propeller blade and foam to cover the inner space of the skin and the annular spar, and the destruction means are explosive wires which are located following a spiral shape around the annular spar.

In a particular embodiment, the propeller blade comprises a skin, an annular spar which extends substantially along the span of the propeller blade and foam to cover the inner space of the skin and the annular spar, and the destruction means are explosive wires which are located next to the annular spar.

In particular embodiments, both detecting means and the destruction means are comprised in an area delimited by the reinforcing elements. In particular embodiments, both detecting means and the destruction means are comprised outside an area delimited by the reinforcing elements.

Advantageously, these embodiments ensure the destruction of the blade, as the destruction means are located next to the elements which provide the main mechanical properties to the propeller blade.

In a particular embodiment, the detecting means further comprise a circuit that is arranged along the span of the propeller blade, and part of the circuit is arranged in the propeller hub.

In a second inventive aspect, the invention provides an engine comprising a propeller blade according to the first inventive aspect.

In a third inventive aspect, the invention provides an aircraft comprising an engine according to the second inventive aspect.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Fig 1.: This figure shows an example of a self-destruction device for a propeller.
- Fig 2.: This figure shows an example of a self-destruction device for a propeller not forming part of the claimed invention.
- Fig 3.: This figure shows a propeller blade comprising a first embodiment of a self-destruction device for a propeller according to the invention.
- Fig 4.: This figure shows a propeller blade comprising a second embodiment of a self-destruction device for a propeller according to the invention.
- Fig 5.: This figure shows a propeller blade comprising another example of a self-destruction device for a propeller.

- Fig. 6: This figure shows an engine according to the invention.
- Fig. 7: This figure shows an aircraft according to the invention.

### DETAILED DESCRIPTION OF THE INVENTION

Every self-destruction device according to the invention comprises:
detecting means adapted to detect a release of the propeller blade,
warning means adapted to send a release alarm in the event of the detecting means detecting release of the propeller blade, and
destruction means, adapted to destroy the propeller blade in the event of receiving a release alarm from the warning means.

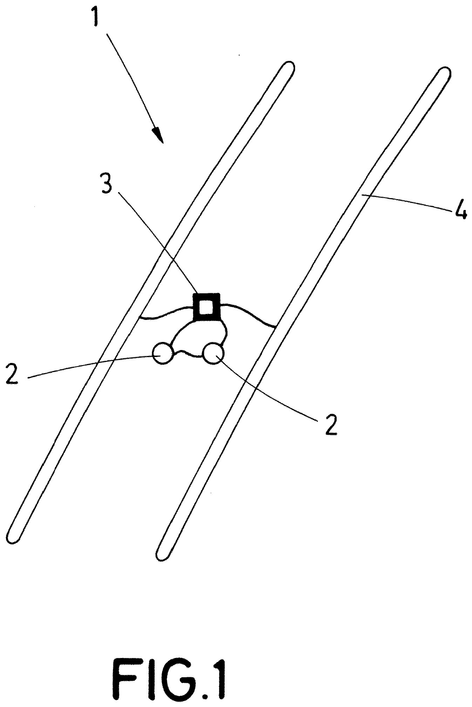

In the example shown in Figure 1, the detecting means (2) of the self-destruction device (1) are a plurality of accelerometers and the destruction means (4) are two explosive wires, which are connected to the accelerometers by means of the warning means (3). In the event that a blade is partially or totally released, the detecting means would detect an acceleration vector with a component that is greater than a predetermined trigger value which is not due to the acceleration of braking in a rotational movement, and as a consequence, the warning means (3) would activate the destruction means (4). The accelerometers are previously calibrated to set a suitable trigger value, over which the warning means (3) activate the destruction means (4).

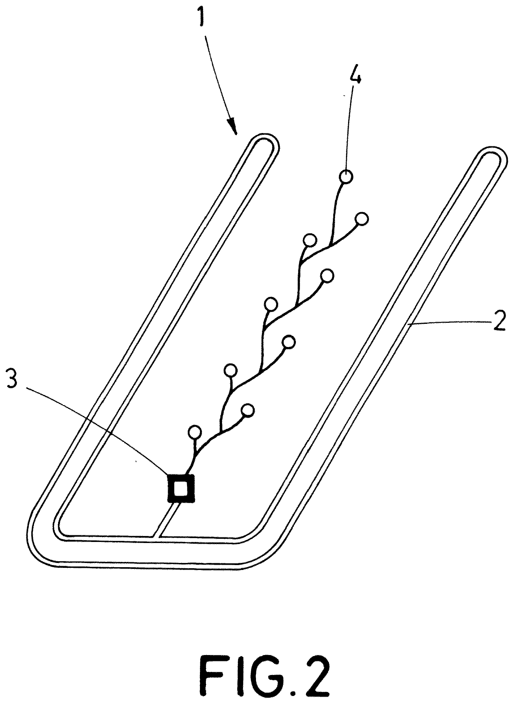

In the example shown in Figure 2, the detecting means (2) further comprise an electric circuit. One part of the circuit is intended to be placed in the part of the blade which is expected to be released, and the other part of the circuit is intended to be placed in the propeller hub, which is not intended to be released. In the event of a blade release, the circuit would become open, and the warning means (3), detecting the condition of open circuit, would activate the destruction means (4). In this example, the destruction means (4) are a plurality of explosive loads which are arranged linearly. In different embodiments, the explosive loads are arranged according to different patterns. Being the detecting means suitable for being placed along the whole span of a rotor blade, it allows the detection of both a total release and a partial break of the blade.

In another example, the destruction means are means which are intended to initiate a shockwave when being activated. This example is particularly suitable for a blade with a monolithic structure, as shockwaves are particularly effective for destroying this kind of blade.

Any combination of detecting means, comprising a plurality of accelerometers arranged along the span of the propeller blade, and destruction means are suitable for being present in different embodiments of self-destruction means according to this invention.

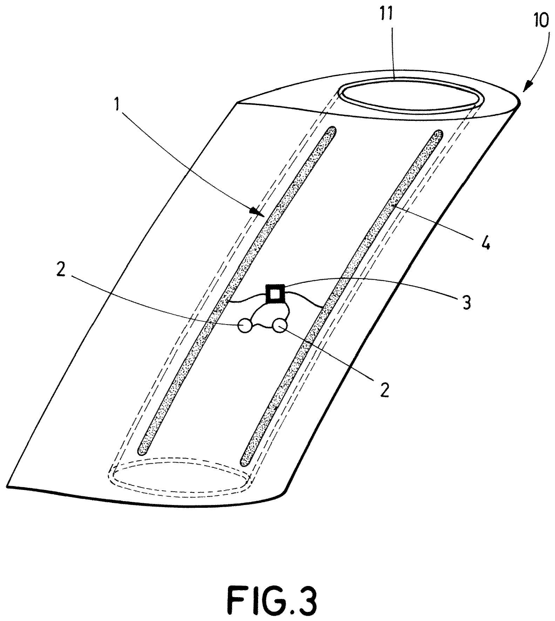

In a particular embodiment, the propeller blade is made of composite material, and the destruction means are explosive wires which are interwoven with the fabrics of the composite material of the blade. In a particular embodiment, the blade comprises an annular spar covering the whole blade span, and the destruction means are located next to the annular spar. In a further particular embodiment, the destruction means are explosive wires which are located following a spiral shape around the annular spar. Figure 3 show a propeller blade (10) comprising self-destruction means (1) according to the example shown in Figure 1. The destruction means (4) are explosive wires arranged along the span of the propeller blade (10). In this particular embodiment, the propeller blade comprises a skin (13), an annular spar (11) which
extends substantially
along the span of the propeller blade (10) and foam (14) to cover the inner space of the skin and the annular spar (11), and the explosive wires are located inside of the reinforcement zone of the propeller blade. According to the invention, the detecting means (2) comprise a plurality of accelerometers arranged along the span of the propeller blade (10). In this particular embodiment, at least one of them is located near the tip of the propeller blade (10), so that both a partial break and a total release of the propeller blade (10) are detected by the detecting means (2).

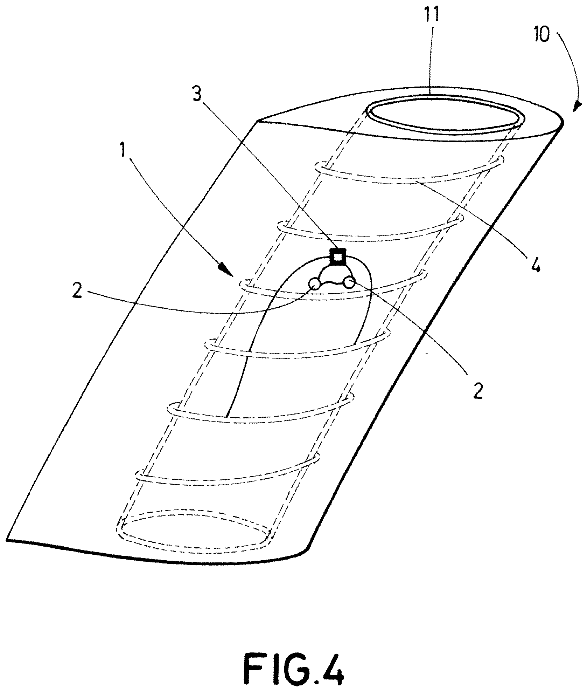

Figure 4 show another propeller blade comprising a self-destruction means according to the example shown in Figure 1. In the embodiment shown in this figure, the propeller blade (10) comprises a skin (13), an annular spar (11) which extends substantially along the span of the propeller blade (10) and foam (14) to cover the inner space of the skin and the annular spar (11), and the destruction means (4) are explosive wires which are located following a spiral shape around the annular spar (11). The detecting means (2) comprise a plurality of accelerometers arranged along the span of the propeller blade (10). At least one of them is located near the tip of the propeller blade (10), so that both a partial break and a total release of the propeller blade (10) are detected by the detecting means (2). In a different embodiment, not shown, the destruction means (4) are explosive wires which are located following a spiral shape in the inner side of the annular spar (11).

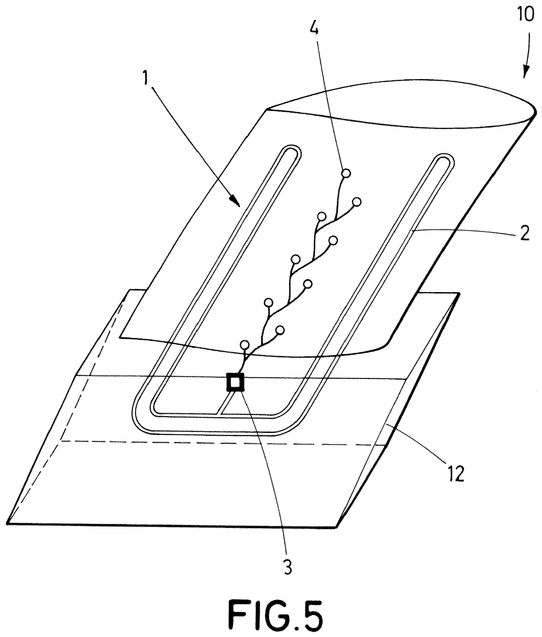

Figure 5 show a propeller blade (10) comprising a self-destruction means (1) according to the example shown in Figure 2. One part of the circuit is placed in the part of the propeller blade (10) which is expected to be released, which means that part of the circuit is placed in the half of the blade which is further from the hub (12), and the other part of the circuit is placed in the propeller hub (12), which is not intended to be released.

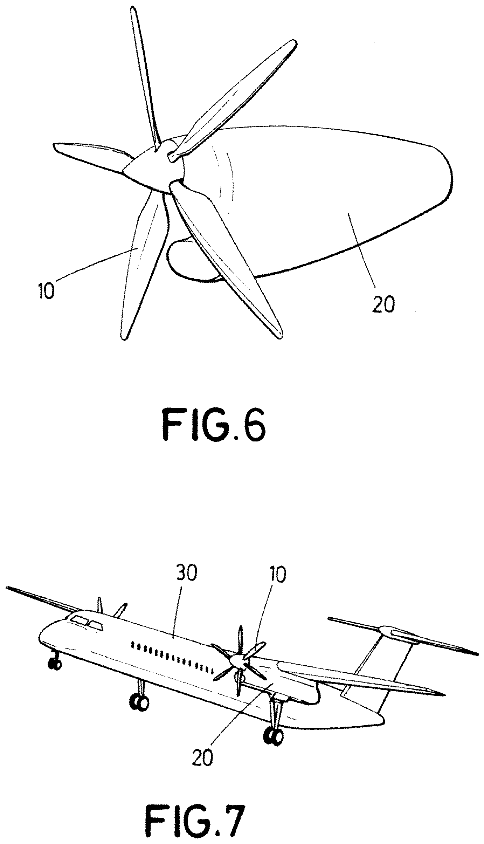

Figure 6 shows an engine (20) comprising a propeller blade according to the one shown in Figure 3.

Figure 7 shows an aircraft (30) comprising an engine (20) as shown in Figure 5.

## Claims

1. Propeller blade (10) comprising a self-destruction device (1), the self-destruction device (1) comprising
detecting means (2) adapted to detect a release of the propeller blade (10),
warning means (3) adapted to send a release alarm in the event of the detecting means (2) detecting release of the propeller blade (10), and
destruction means (4) adapted to destroy the propeller blade (10) in the event of receiving a release alarm from the warning means (3),
wherein the detecting means (2) comprises a plurality of accelerometers arranged along the span of the propeller blade (10).

2. Propeller blade (10) according to claim 1, wherein the detecting means (2) further comprise a circuit arranged along the span of the propeller blade (10), so that an eventual blade release would cause the opening of the circuit and the sending of a release alarm by the warning means (3).

3. Propeller blade (10) according to the preceding claim, wherein the destruction means (4) comprise a plurality of explosive loads.

4. Propeller blade (10) according to previous claim wherein the plurality of explosive loads are arranged covering substantially the whole span of the propeller blade (10).

5. Propeller blade (10) according to any of claims 3 to 4, wherein the explosive loads are explosive wires.

6. Propeller blade (10) according to any of the preceding claims, wherein the propeller blade (10) is made of a fibre composite material and the destruction means (4) are explosive wires which are interwoven with the fibres of the composite material.

7. Propeller blade (10) according to any of claims 1 to 5, wherein the propeller blade (10) comprises a skin (13) and reinforcing elements, and the destruction means (4) are located next to the reinforcing elements.

8. Propeller blade (10) according to claim 7, wherein the reinforcing elements comprise an annular spar (11) which extends substantially along the span of the propeller blade (10) and foam (14) to cover the inner space of the skin (13) and the annular spar (11), and the destruction means (4) are explosive wires which are located following a spiral shape around the annular spar (11).

9. Propeller blade (10) according to claim 7, wherein the reinforcing elements comprise an annular spar (11) which extends substantially along the span of the propeller blade (10) and foam (14) to cover the inner space of the skin and the annular spar (11), and the destruction means (4) are explosive wires which are located next to the annular spar (11).

10. Propeller blade (10) according to claim 1 or any of claims 3 to 5, wherein the detecting means (2) further comprise a circuit that is arranged along the span of the propeller blade (10), and part of the circuit is configured to be arranged in a propeller hub (12).

11. Propeller blade (10) according to claim 2, wherein part of the circuit is configured to be arranged in a propeller hub (12).

12. Engine (20) comprising a propeller blade (10) according to any of claims 1 to 11.

13. Aircraft (30) comprising an engine (20) according to the preceding claim.

## Patentansprüche

1. Propellerschaufel (10), umfassend eine Selbstzerstörungsvorrichtung (1), die Selbstzerstörungsvorrichtung (1) umfassend
Erfassungsmittel (2), welche dazu eingerichtet sind, eine Freigabe der Propellerschaufel (10) zu erfassen,
Warnmittel (3), welche dazu eingerichtet sind, einen Freigabealarm in dem Fall zu senden, dass die Erfassungsmittel (2) eine Freigabe der Propellerschaufel (10) erfassen, und
Zerstörungsmittel (4), welche dazu eingerichtet sind, die Propellerschaufel (10) in dem Fall zu zerstören, dass ein Freigabealarm von den Warnmittel (3) erfasst wird,
wobei die Erfassungsmittel (2) eine Mehrzahl von Beschleunigungssensoren umfassen, welche entlang der Spannweite der Propellerschaufel (10) angeordnet sind.

2. Propellerschaufel (10) nach Anspruch 1, wobei die Erfassungsmittel (2) ferner eine Schaltung umfassen, welche entlang der Spannweite der Propellerschaufel (10) angeordnet ist, so dass eine mögliche Schaufelfreigabe das Öffnen der Schaltung und das Senden eines Freigabealarms durch die Warnmittel (3) hervorrufen würde.

3. Propellerschaufel (10) nach dem vorhergehenden Anspruch, wobei die Zerstörungsmittel (4) eine Mehrzahl von Explosionsladungen umfassen.

4. Propellerschaufel (10) nach dem vorhergehenden Anspruch, wobei die Mehrzahl von Explosionsladungen derart angeordnet sind, dass sie im Wesentlichen die gesamte Spannweite der Propellerschaufel (10) abdecken.

5. Propellerschaufel (10) nach einem der Ansprüche 3 bis 4, wobei die Explosionsladungen Explosionsdrähte sind.

6. Propellerschaufel (10) nach einem der vorhergehenden Ansprüche, wobei die Propellerschaufel (10) aus einem Faserverbundmaterial hergestellt ist und die Zerstörungsmittel (4) Explosionsdrähte sind, welche mit den Fasern des Verbundmaterials zusammen verwoben sind.

7. Propellerschaufel (10) nach einem der Ansprüche 1 bis 5, wobei Propellerschaufel (10) eine Haut (13) und Verstärkungselemente umfasst und die Zerstörungsmittel (4) den Verstärkungselementen benachbart angeordnet sind.

8. Propellerschaufel (10) nach Anspruch 7, wobei die Verstärkungselemente einen ringförmigen Holm (11), welcher sich im Wesentlichen entlang der Spannweite der Propellerschaufel (10) erstreckt, und Schaum (14) umfassen, um den inneren Raum der Haut (13) und des ringförmigen Holms (11) abzudecken, und die Zerstörungsmittel (4) Explosionsdrähte sind, welche einer Spiralform um den ringförmigen Holm (11) folgend angeordnet sind.

9. Propellerschaufel (10) nach Anspruch 7, wobei die Verstärkungselemente einen ringförmigen Holm (11), welcher sich im Wesentlichen entlang der Spannweite der Propellerschaufel (10) erstreckt, und Schaum (14) umfassen, um den inneren Raum der Haut und des ringförmigen Holms (11) abzudecken, und die Zerstörungsmittel (4) Explosionsdrähte sind, welche dem ringförmigen Holm (11) benachbart angeordnet sind.

10. Propellerschaufel (10) nach Anspruch 1 oder nach einem der Ansprüche 3 bis 5, wobei die Erfassungsmittel (2) ferner eine Schaltung umfassen, welche entlang der Spannweite der Propellerschaufel (10) angeordnet ist, und ein Teil der Schaltung dazu eingerichtet ist, in einer Propellernabe (12) angeordnet zu sein.

11. Propellerschaufel (10) nach Anspruch 2, wobei ein Teil der Schaltung dazu eingerichtet ist, in einer Propellernabe (12) angeordnet zu sein.

12. Motor (20), umfassend eine Propellerschaufel (10) nach einem der Ansprüche 1 bis 11.

13. Flugzeug (30), umfassend einen Motor (20) nach dem vorhergehenden Anspruch.

## Revendications

1. Pale d'hélice (10) comprenant un dispositif d'autodestruction (1), le dispositif d'autodestruction (1) comprenant
des moyens de détection (2) adaptés pour détecter un détachement de la pale d'hélice (10),
des moyens d'avertissement (3) adaptés pour envoyer une alarme de détachement dans le cas où les moyens de détection (2) détectent le détachement de la pale d'hélice (10), et
des moyens de destruction (4) adaptés pour détruire la pale d'hélice (10) en cas de la réception d'une alarme de détachement provenant des moyens d'avertissement (3),
les moyens de détection (2) comprenant une pluralité d'accéléromètres disposés le long de l'étendue de la pale d'hélice (10).

2. Pale d'hélice (10) selon la revendication 1, dans laquelle les moyens de détection (2) comprennent en outre un circuit agencé le long de l'étendue de la pale d'hélice (10), de sorte qu'un éventuel détachement de la pale provoquerait l'ouverture du circuit et l'envoi d'une alarme de détachement par les moyens d'avertissement (3).

3. Pale d'hélice (10) selon la revendication précédente, dans laquelle les moyens de destruction (4) comprennent une pluralité de charges explosives.

4. Pale d'hélice (10) selon la revendication précédente dans laquelle la pluralité de charges explosives sont agencées de façon à couvrir sensiblement toute l'étendue de la pale d'hélice (10).

5. Pale d'hélice (10) selon l'une quelconque des revendications 3 à 4, dans laquelle les charges explosives sont des fils explosifs.

6. Pale d'hélice (10) selon l'une quelconque des revendications précédentes, dans laquelle la pale d'hélice (10) est réalisée en un matériau composite fibreux et les moyens de destruction (4) sont des fils explosifs qui sont entrelacés avec les fibres du matériau composite.

7. Pale d'hélice (10) selon l'une quelconque des revendications 1 à 5, dans laquelle la pale d'hélice (10) comprend une peau (13) et des éléments de renforcement, et les moyens de destruction (4) sont situés à proximité des éléments de renforcement.

8. Pale d'hélice (10) selon la revendication 7, dans laquelle les éléments de renforcement comprennent un longeron annulaire (11) qui s'étend sensiblement le long de l'étendue de la pale d'hélice (10) et de la mousse (14) pour recouvrir l'espace interne de la peau (13) et le longeron annulaire (11), et les moyens de destruction (4) sont des fils explosifs qui sont disposés suivant une forme en spirale autour du longeron annulaire (11).

9. Pale d'hélice (10) selon la revendication 7, dans laquelle les éléments de renforcement comprennent un longeron annulaire (11) qui s'étend sensiblement le long de l'étendue de la pale d'hélice (10) et de la mousse (14) pour recouvrir l'espace interne de la peau et le longeron annulaire (11), et les moyens de destruction (4) sont des fils explosifs qui sont situés à proximité du longeron annulaire (11).

10. Pale d'hélice (10) selon la revendication 1 ou l'une quelconque des revendications 3 à 5, dans laquelle les moyens de détection (2) comprennent en outre un circuit qui est agencé le long de l'étendue de la pale d'hélice (10), et une partie du circuit est configurée pour être agencée dans un moyeu d'hélice (12).

11. Pale d'hélice (10) selon la revendication 2, dans laquelle une partie du circuit est configurée pour être agencée dans un moyeu d'hélice (12).

12. Moteur (20) comprenant une pale d'hélice (10) selon l'une quelconque des revendications 1 à 11.

13. Aéronef (30) comprenant un moteur (20) selon la revendication précédente.
